# EUROPÄISCHE PATENTSCHRIFT

(11) **EP 1 621 826 B1**
(45) Veröffentlichungstag und Bekanntmachung des Hinweises auf die Patenterteilung: **10.09.2014**
(21) Anmeldenummer: 04291929.0
(22) Anmeldetag: 27.07.2004
(51) Int. Cl.: F24H 9/18, F24H 3/04, B60H 1/22

(54) **Heizungsanordnung mit PTC-Element, insbesondere für ein Kraftfahrzeug**
Heating arrangement with PTC-Element, in particular for a vehicle
Ensemble de chauffage avec un élément CTP, notamment pour un véhicule automobile

(43) Veröffentlichungstag der Anmeldung: 01.02.2006
(73) Patentinhaber: Behr France Rouffach SAS, 68250 Rouffach (FR)
(72) Erfinder: Brun, Michel, 68740 Rustenhart (FR); Eckerlen, Gérard, 68250 Rouffach (FR); Schmittheisler, Christophe, 67680 Epfig (FR); Miss, Pascal, 67600 Selestat (FR); Gogmos, Erwan, 56600 Lanester (FR); Mougey, Mathieu, 68190 Ensisheim (FR)
(74) Vertreter: Grauel, Andreas

(56) Entgegenhaltungen:
- EP-A- 1 327 834
- DE-U- 9 407 104
- US-A- 5 562 844
- US-A- 6 124 570

## Beschreibung

Die Erfindung betrifft eine Heizungsanordnung mit einem PTC-Element, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die US 6 124 570 A offenbart eine Heizungsanordnung mit einer Mehrzahl von elektrischen PTC-Heizelementen, die Teil von Heizsträngen sind, welche durch je eine Baugruppe gebildet sind, wobei jeder Heizstrang mindestens ein elektrisches Heizelement, insbesondere PTC-Element, zwei von außen elektrisch kontaktierte Kontaktbleche und zwei Wellrippen aufweist.

Es ist Aufgabe der Erfindung, eine verbesserte Heizungsanordnung mit einem elektrischen Heizelement, insbesondere PTC-Element zur Verfügung zu stellen.

Diese Aufgabe wird gelöst durch eine Heizungsanordnung mit einem elektrischen Heizelement, insbesondere PTC-Element mit den Merkmalen des Anspruchs 1. Vorteilhafte Ausgestaltungen sind Gegenstand der Unteransprüche.

Erfindungsgemäß ist eine Heizungsanordnung, insbesondere für ein Kraftfahrzeug, mit einer Mehrzahl von elektrischen Heizelementen, insbesondere PTC-Elementen, die Teil von Heizsträngen sind, welche durch je eine Baugruppe gebildet sind, wobei jeder Heizstrang mindestens ein elektrisches Heizelement, insbesondere PTC-Element, zwei von außen elektrisch kontaktierte Kontaktbleche und zwei Wellrippen aufweist, und zwei benachbarte Baugruppen spiegelbildlich oder gleich ausgebildet und spiegelbildlich und/oder gleich angeordnet sind. Da die Baugruppen, die für verschiedene Heizungsanordnungen bevorzugt identisch oder zumindest mit gleichen Unterbaugruppen ausgebildet sind, in einer großen Stückzahl hergestellt werden können, können die Herstellungskosten gesenkt und die Logistik vereinfacht werden. Da eine Vielzahl gleicher Teile verwendet werden, die gegebenenfalls unterschiedlich zusammengesetzt werden, lassen sich zudem Varianten optimieren, d.h. die Position der PTC-Elemente kann an die Erfordernisse, d.h. an den Verlauf der Luftströmung, optimal angepasst werden.

Jede Baugruppe weist vorzugsweise mindestens zwei Kontaktbleche auf, an welchen seitlich ein Kontaktelement angebracht ist, das der elektrischen Kontaktierung dient. Dabei sind die Kontaktbleche, die mit den Kontaktelementen verbunden sind, gleich ausgebildet wie die anderen Kontaktbleche der Baugruppe. An den Kontaktelementen sind bevorzugt Federzungen zur Verbesserung der elektrischen Kontaktierung vorgesehen.

Die Baugruppe weist vorzugsweise mindestens zwei Wellrippen auf, welche auf der Außenseite zweier Kontaktbleche zwischen denen ein PTC-Element vorgesehen ist, angeordnet sind. Die Baugruppe kann um eine, zwei oder gegebenenfalls mehr Wellrippen erweitert werden, wobei bevorzugt zwischen zwei Wellrippen ein Kontaktblech vorgesehen ist. Dies ermöglicht bei identischem Aufbau des Kernbereichs eine relativ variable Gestaltung der Breite der Baugruppe. Die Heizungsanordnung kann sowohl gemeinsam geregelte als auch, insbesondere im Falle von mehrzonigen Klimaanlagen, unabhängig voneinander geregelte Heizstränge umfassen.

Die Baugruppen sind bevorzugt in einen Rahmen eingelegt, insbesondere in einen spritzgegossenen Kunststoff-Rahmen. Der Rahmen ist bevorzugt mehrteilig ausgebildet. Dabei sind die einzelnen Rahmenelemente bevorzugt mittels Clipsverbindungen miteinander verbunden, wodurch eine sehr einfache und schnelle Montage ohne Werkzeug möglich ist.

Der Rahmen weist vorzugsweise eine als Trennwand dienende Querstrebe auf, welche zwei benachbarte Baugruppen voneinander räumlich und/oder thermisch oder elektrisch trennt. Die Querstrebe ist bevorzugt in einer Symmetrieebene des Rahmens angeordnet. Insbesondere im Falle einer mehrzonigen Klimaanlage ist zur Trennung der Luftströme bevorzugt senkrecht zu einer ersten, parallel zu den Baugruppen verlaufenden Querstrebe eine zweite Querstrebe vorgesehen. Diese ragt jedoch im Falle von nur zwei Baugruppen vorzugsweise nur bis zu den Baugruppen heran und nicht zwischen dieselben.

Die elektrische Kontaktierung der Kontaktelemente erfolgt bevorzugt mit Hilfe einer seitlich am Rahmen vorgesehenen Abdeckung, welche einen Teil des Rahmens bildet. Diese ist vorzugsweise auch mittels Clipsverbindungen befestigt. Auf der Außenseite der Abdeckung sind vorzugsweise Stecker vorgesehen.

Die elektrische Ansteuerung sowie die Kontaktierung der Kontaktelemente können auf beliebige Weise erfolgen.

Im Folgenden wird die Erfindung anhand von zwei Ausführungsbeispielen unter Bezugnahme auf die Zeichnung im Einzelnen erläutert. In der Zeichnung zeigen:
- Fig. 1: eine perspektivische Ansicht einer Baugruppe A einer Heizungsanordnung gemäß dem ersten Ausführungsbeispiel,
- Fig. 2: eine perspektivische Ansicht der Heizungsanordnung gemäß dem ersten Ausführungsbeispiel in einem teilmontierten Zustand,
- Fig. 3: eine perspektivische Ansicht eines Teils des Rahmens der Heizungsanordnung gemäß dem ersten Ausführungsbeispiel,
- Fig. 4: eine perspektivische Ansicht einer seitlichen Abdeckung des Rahmens der Heizungsanordnung gemäß dem ersten Ausführungsbeispiel,
- Fig. 5: eine perspektivische Ansicht der Heizungsanordnung gemäß dem ersten Ausführungsbeispiel ohne seitliche Abdeckung,
- Fig. 6: eine perspektivische Ansicht der Heizungsanordnung gemäß dem ersten Ausführungsbeispiel im zusammengebauten Zustand,
- Fig. 7: eine perspektivische Ansicht der beiden Baugruppen A und B der Heizungsanordnung gemäß dem zweiten Ausführungsbeispiel,

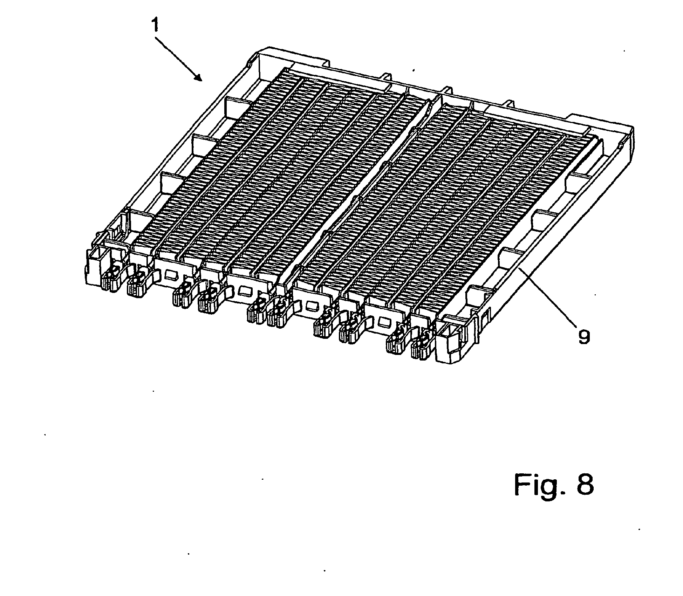

- Fig. 8: eine perspektivische Ansicht der Heizungsanordnung gemäß dem zweiten Ausführungsbeispiel in einem teilmontierten Zustand, und

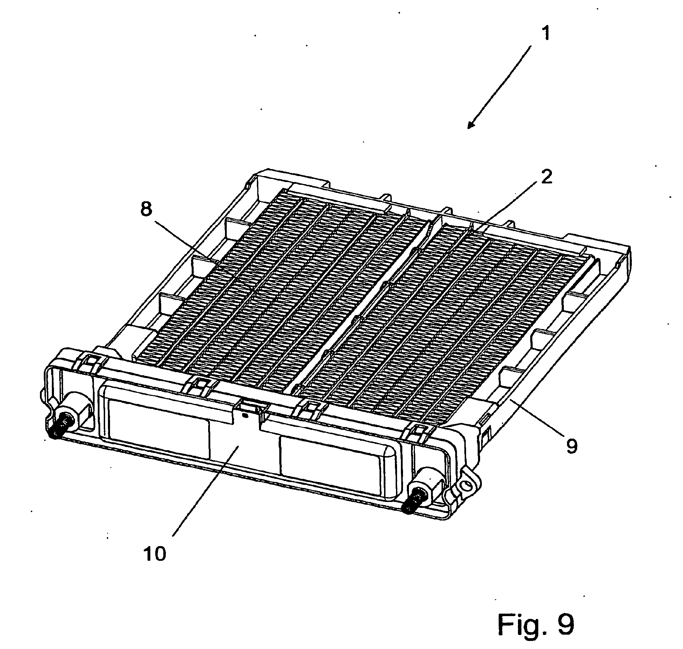

- Fig. 9: eine perspektivische Ansicht der Heizungsanordnung gemäß dem zweiten Ausführungsbeispiel im zusammengebauten Zustand.

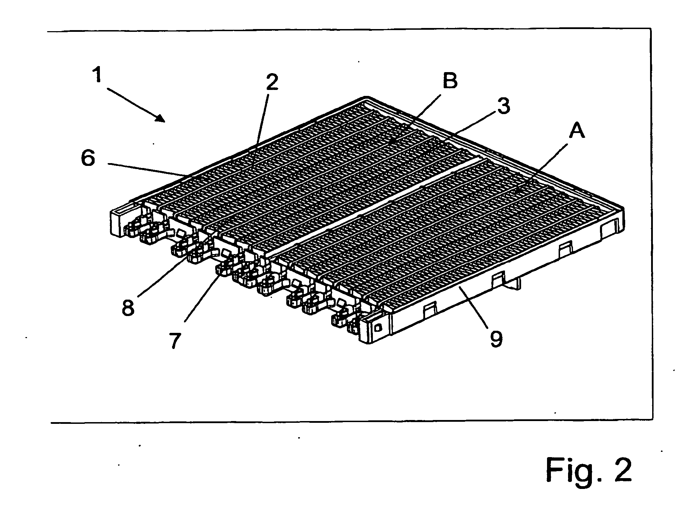

Eine PTC-Heizungsanordnung 1, die als Zuheizer in einer vierzonigen Kraftfahrzeug-Klimaanlage in Luftströmungsrichtung gesehen nach einem herkömmlichen Heizer angeordnet ist, ist gemäß dem ersten Ausführungsbeispiel durch zwei Baugruppen gebildet, die spiegelbildlich angeordnet sind (in Fig. 2 mit A und B bezeichnet).

Jede der Baugruppen A und B besteht aus einer Mehrzahl von Keramik-PTC-Elementen 2, Kontaktblechen 3 und Wellrippen 6. Ein Keramik-PTC-Element 2 ist zwischen zwei parallel zueinander angeordneten Kontaktblechen 3 eingeklebt, vorliegend mittels eines elektrisch leitenden Klebstoffes (nicht dargestellt). Alternativ kann beispielsweise auch eine Lot-Verbindung vorgesehen sein. Auf den jeweils dem PTC-Element 2 gegenüberliegenden Seiten der Kontaktbleche 3 sind mittels einer entsprechenden KlebeVerbindung Wellrippen 6 angebracht, die wiederum auf der dem PTC-Element 2 abgewandten Seite mit einem weiteren Kontaktblech 3 entsprechend verbunden sind.

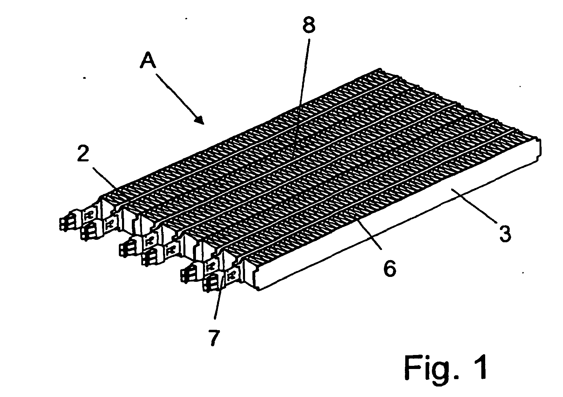

Vorliegend sind, wie in Fig. 1 dargestellt, fünf PTC-Elemente 2 vorgesehen, die jeweils zwischen zwei Kontaktblechen 3 angeordnet sind, welche wiederum von Wellrippen 6 getrennt sind, wobei teilweise auch zwischen zwei Wellrippen 6 nur ein Kontaktblech 3 ohne PTC-Element 2 vorgesehen ist. Verschiedene Kontaktbleche 3 sind auf einer Seite durch Anbringung eines Kontaktelements 7 verlängert ausgebildet, so dass sie der elektrischen Kontaktierung dienen. Dabei sind zwischen je zwei verlängert ausgebildeten Kontaktblechen 3 jeweils genau ein PTC-Element 2 vorgesehen. Ferner sind ein oder zwei Wellrippen 6 und ein oder zwei nicht verlängert ausgebildete Kontaktbleche 3 zwischen je zwei verlängert ausgebildeten Kontaktblechen 3 vorgesehen. Auf der in Fig. 1 rechts dargestellten Seite ist rechts vom letzten auf der rechten Seite verlängert ausgebildeten Kontaktblech 3 noch eine Wellrippe 6 und ein der Stabilisierung und dem Wärmeübertragung dienendes nicht verlängert ausgebildetes Kontaktblech 3 vorgesehen. Auf der linken Seite endet die Baugruppe mit einem verlängert ausgebildeten Kontaktblech 3. In Fig. 1 sind die Polungen durch "+" und "-" symbolisch dargestellt, wobei die Polung alternativ auch umgekehrt sein kann. Zwischen zwei benachbarten, verlängert ausgebildeten Kontaktblechen 3 liegt eine Spannung von 13 V an, die Spannung kann jedoch auch größer sein, beispielsweise 48 V.

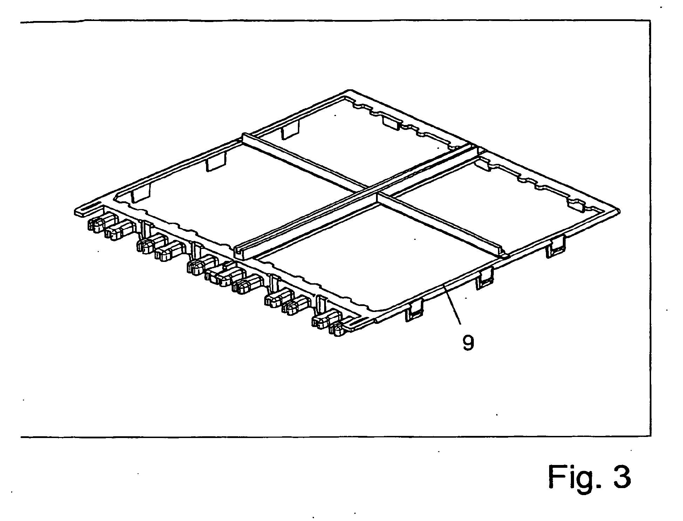

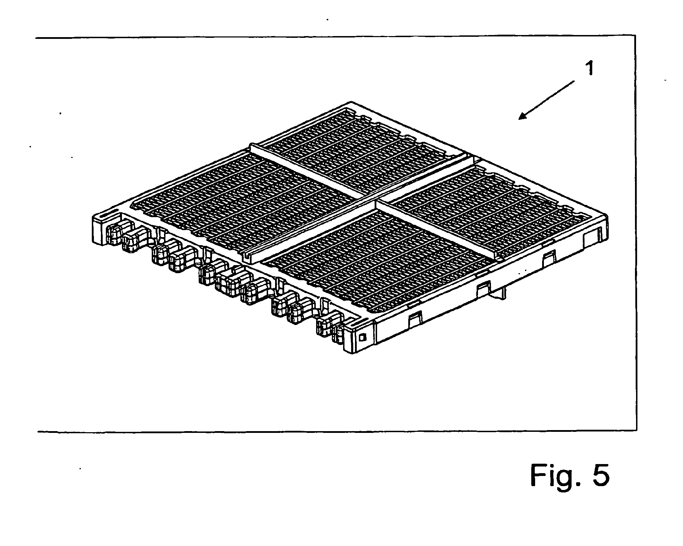

Jede der Baugruppen A und B bildet, auf Grund der gemeinsamen elektrischen Kontaktierung der einzelnen PTC-Elemente jeder Baugruppe A und B einen voneinander unabhängig geregelten Heizstrang 8. Natürlich ist, insbesondere für eine einzonige Klimaanlage, auch eine einfache, gemeinsame Regelung der beiden Baugruppen A und B möglich. Um die zuvor beschriebene Heizungsanordnung 1 herum ist ein zweiteiliger Kunststoff-Rahmen 9, vorliegend aus Polyamid, angeordnet, wobei die beiden Rahmenelemente mittels Clipsverbindungen miteinander verbunden sind. Für die Montage werden die beiden Heizstränge 8 in das untere Rahmenelement eingelegt, wie in Fig. 2 dargestellt, wobei sie beabstandet voneinander angeordnet sind. Anschließend das obere Rahmenelement, das in Fig. 3 als Einzelteil dargestellt ist, aufgelegt und die beiden Rahmenelemente durch Zusammendrücken in Folge des Einrastens der Clipsverbindungen miteinander verbunden. Dieser Zustand ist in Fig. 5 dargestellt.

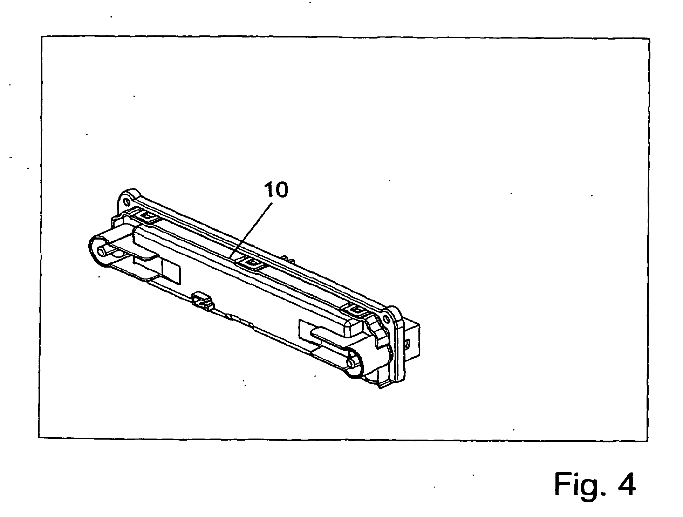

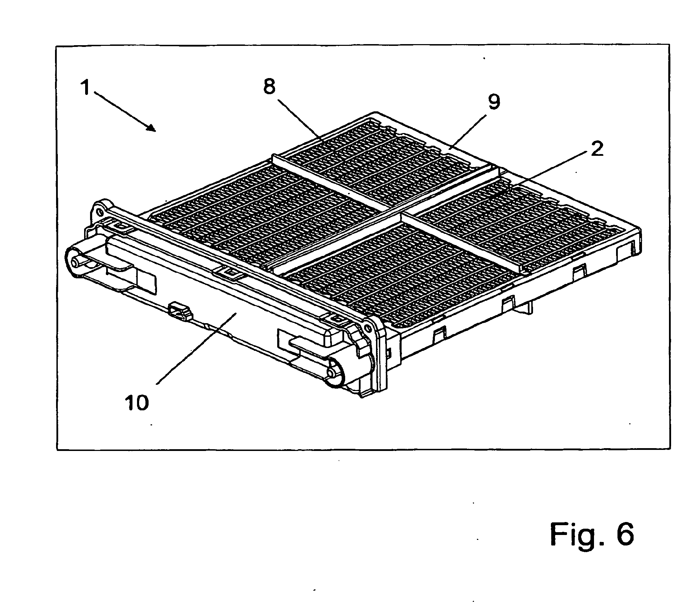

Wie aus Fig. 5 ersichtlich ist, ragen die Kontaktelemente 7 mit ihren äußeren Enden über den Rahmen 9 hinaus. An diesen Enden liegen entsprechenden Kontaktschienen an, die in einer seitlichen Abdeckung 10, dargestellt in Fig. 4, des Kunststoff-Rahmens 9 vorgesehen sind, und die eine gemeinsame elektrische Kontaktierung der einzelnen Heizstränge 8 ermöglichen. Um eine sichere Kontaktierung zu gewährleisten, sind an den Kontaktelementen 7 Federzungen vorgesehen (vgl. Fig. 1). Die Abdeckung 10 wird seitlich aufgesteckt und mittels weiterer Clipsverbindungen an den beiden Rahmenelementen gehalten. Der vollständig zusammengebaute Zustand ist in Fig. 6 dargestellt.

Die einzelnen Heizstränge 8 können hierbei als Standard-Elemente dienen, welche in unterschiedliche Rahmen 9 eingesetzt werden können, wodurch die Herstellungskosten verringert werden. Dabei sind vorliegend die beiden Heizstränge 8 identisch ausgebildet, jedoch ist einer der Heizstränge 8 um 180° gedreht eingebaut. Jede Baugruppe besteht aus Unterbaugruppen, so dass die Herstellungskosten weiter gesenkt werden können.

Zumindest das obere der Rahmenelemente weist gemäß dem vorliegenden Ausführungsbeispiel gekreuzt angeordnete Querstreben auf (vgl. Fig. 3), welche der Aufteilung der Luftströmung dienen (vierzonige Klimaanlage). Die in Längsrichtung der PTC-Elemente 2 verlaufende Querstrebe dient zum Einen der Stabilisierung und zum Anderen der räumlichen Trennung der beiden Heizstränge 8. Da auf Grund der Symmetrie an den benachbarten, mittig im Rahmen 9 angeordneten Kontaktblechen 3 die gleiche Polung anliegt, ist ein Kurzschluss ausgeschlossen. Dabei sind je zwei Zonen der Klimaanlage auf Grund des Vorhandenseins von nur zwei Heizungssträngen 8 miteinander gekoppelt, d.h. die fahrerseitige Klimatisierung von Front und Fond sowie die beifahrerseitige Klimatisierung von Front und Fond sind miteinander gekoppelt. Dies hat, da der Zuheizer im Wesentlichen nur eine Hilfsfunktion hat, keine wesentliche Beeinträchtigung des Komforts zur Folge. Prinzipiell ist jedoch auch das Vorsehen von vier Heizsträngen möglich, entsprechend den vier Zonen. Auch in diesem Fall können spiegelbildlich ausgebildete oder identische Baugruppen verwendet werden, wobei die elektrische Kontaktierung bevorzugt von beiden Seiten erfolgt.

Im Falle einer zweizonigen Klimaanlage kann die senkrecht zu den PTC-Elementen angeordnete Querstrebe entfallen, so dass die Luftströmung in diesem Bereich nicht behindert wird. Ansonsten kann der Aufbau identisch sein oder beispielsweise wie im Folgenden unter Bezugnahme auf das zweite Ausführungsbeispiel beschrieben.

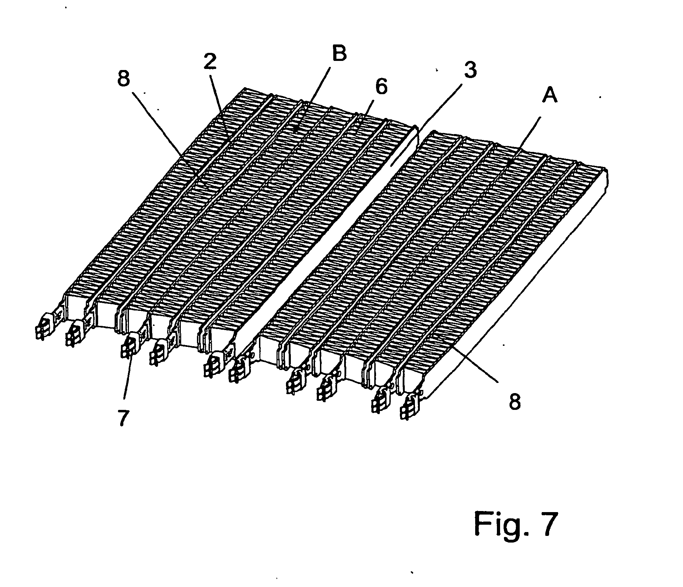

Fig. 7 zeigt die beiden Baugruppen A und B, bestehend aus je einem Heizstrang 8, für ein Heizelement 1 gemäß dem zweiten Ausführungsbeispiel. Wie aus der andersartigen Ausgestaltung des Rahmens 9, dem die senkrecht zu den PTC-Elementen 2 verlaufende Querstrebe fehlt, ist dieses Heizelement 1 insbesondere für eine zweizonige Klimaanlage vorgesehen. Natürlich kann sie auch für eine einzonige Klimaanlage oder gegebenenfalls für eine mehrzonige Klimaanlage verwendet werden.

Im Unterschied zum ersten Ausführungsbeispiel sind je Baugruppe fünf Kontaktelemente 7 vorgesehen. Die Ausgestaltung der beiden Baugruppen A und B sind identisch, jedoch ist eine der Baugruppen A und B um 180° gedreht im Rahmen 9 angeordnet. Jede der Baugruppen A und B weist wiederum Unterbaugruppen auf.

### Bezugszeichenliste

- 1: Heizungsanordnung
- 2: PTC-Element
- 3: Kontaktblech
- 6: Wellrippe
- 7: Kontaktelement
- 8: Heizstrang
- 9: Rahmen
- 10: Abdeckung

## Patentansprüche

1. Heizungsanordnung, insbesondere für ein Kraftfahrzeug, mit einer Mehrzahl von elektrischen Heizelementen, insbesondere PTC-Elementen (2), die Teil von Heizsträngen (8) sind, welche durch je eine Baugruppe gebildet sind, wobei jeder Helzstrang (8) mindestens ein elektrisches Heizelement, insbesondere PTC-Element (2), zwei von außen elektrisch kontaktierte Kontaktbleche (3) und zwei Wellrippen (6) aufweist, wobei zwei benachbarte Baugruppen spiegelbildlich oder gleich ausgebildet und spiegelbildlich und/oder gleich angeordnet sind, **dadurch gekennzeichnet, dass** die Baugruppen in einen Rahmen (9) eingelegt sind, der eine in einer Symmetrieebene des Rahmens (9) angeordnete, als Trennung dienende Querstrebe aufweist, welche zwei benachbarte Baugruppen voneinander räumlich trennt.

2. Heizungsanordnung nach Anspruch 1, **dadurch gekennzeichnet, dass** jede Baugruppe mindestens zwei Kontaktbleche (3) aufweist, an welchen seitlich ein Kontaktelement (7) angebracht ist, das der elektrischen Koritaktierung dient.

3. Heizungsänordnung nach Anspruch 2, **dadurch gekennzeichnet, dass** das Kontaktelement (7) Federzungen umfasst.

4. Heizungsanordnung nach einem der vorhergehenden Ansprüche, **dadurch gekennzeichnet, dass** der Rahmen (9) ein Kunststoff-Rahmen ist.

5. Heizungsanordnung nach einem der vorhergehenden Ansprüche, **dadurch gekennzeichnet, dass** eine zweite Querstrebe senkrecht zu einer ersten, parallel zu den Baugruppen verlaufenden Querstrebe vorgesehen ist.

6. Heizungsanordnung nach einem der vorhergehenden Ansprüche, **dadurch gekennzeichnet, dass** ein die Heizstränge (8) umgebender Rahmen (9) mindestens zweiteilig ausgebildet ist, wobei die einzelnen Elemente mittels Clipsverbindungen miteinander verbunden sind.

7. Heizungsanordnung nach einem der vorhergehenden Ansprüche, **dadurch gekennzeichnet, dass** die zwei Wellrippen (6) auf der Außenseite zweier Kontaktbleche (3, 4) zwischen denen ein PTC-Element (2) vorgesehen ist, angeordnet sind.

8. Heizungsanordnung nach Anspruch 7, **dadurch gekennzeichnet, dass** seitlich am Rahmen (9) eine Abdeckung (10) vorgesehen ist, welche einen Teil des Rahmens bildet und die elektrische Kontaktierung vorsieht.

9. Heizungsanordnung nach Anspruch 8, **dadurch gekennzeichnet, dass** die Abdeckung (10) mittels Clipsverbindungen befestigt ist.

10. Heizungsanordnung nach einem der vorhergehenden Ansprüche, **dadurch gekennzeichnet, dass** die Heizungsanordnung (1) mindestens zwei unabhängige Heizstränge (8) umfasst, wobei ein oder mehrere Heizstränge (8) einer oder zwei Klimazonen einer mehrzonigen Klimaanlage zugeordnet sind.

## Claims

1. A heating arrangement, in particular for a motor vehicle, comprising a plurality of electrical heating elements, in particular PTC elements (2) that form part of heating sections (8) which are each formed by a module, wherein each heating section (8) has at least one electrical heating element, in particular PCT element (2), two contact plates (3) which are electrically contacted from the outside, and two corrugated ribs (6), wherein two adjacent modules are formed in a mirror-inverted or identical manner and are arranged in a mirror-inverted and/or identical manner, **characterized in that** the modules are inserted into a frame (9) which has a cross brace that is arranged in the plane of symmetry of the frame (9) and serves as a separator which spatially separates two adjacent modules from each other.

2. The heating arrangement according to claim 1, **characterized in that** each module has at least two contact plates (3) on the side of which a contact element (7) is attached that serves for electrical contacting.

3. The heating arrangement according to claim 2, **characterized in that** the contact element (7) comprises spring tongues.

4. The heating arrangement according to any one of the preceding claims, **characterized in that** the frame (9) is a plastic frame.

5. The heating arrangement according to any one of the preceding claims, **characterized in that** a second cross brace is provided that extends perpendicular to a first cross brace which extends parallel to the modules.

6. The heating arrangement according to any one of the preceding claims, **characterized in that** a frame (9) enclosing the heating sections (8) is formed at least in two pieces, wherein the individual elements are connected to each other by means of clip connections.

7. The heating arrangement according to any one of the preceding claims, **characterized in that** the two corrugated ribs (6) are arranged on the outside of two contact plates (3, 4) between which a PTC element (2) is provided.

8. The heating arrangement according to claim 7, **characterized in that** a cover (10) is provided on the side of the frame (9), which cover forms a part of the frame and provides electrical contacting.

9. The heating arrangement according to claim 8, **characterized in that** the cover (10) is fastened by means of clip connections.

10. The heating arrangement according to any one of the preceding claims, **characterized in that** the heating arrangement (1) comprises at least two independent heating sections (8), wherein one or more heating sections (8) are associated with one or two climate zones of a multi-zone air conditioning system.

## Revendications

1. Agencement de chauffage, en particulier pour un véhicule automobile, comprenant une pluralité d'éléments chauffants électriques, en particulier des éléments (2) à coefficient de température positif (CTP) qui font partie de circuits chauffants (8) qui sont formés à chaque fois par un sous-ensemble, où chaque circuit chauffant (8) présente au moins un élément chauffant électrique, en particulier un élément CTP (2), deux tôles de contact (3) mises en contact électriquement de l'extérieur et deux ailettes ondulées (6), où deux sous-ensembles adjacents sont configurés de façon symétrique à effet miroir ou de façon identique et sont disposés de façon symétrique à effet miroir et/ou de façon identique,
**caractérisé en ce que** les sous-ensembles sont insérés dans un cadre (9) qui présente une entretoise transversale servant de séparation et disposée dans un plan de symétrie du cadre (9), entretoise transversale qui sépare l'un de l'autre, dans l'espace, deux sous-ensembles adjacents.

2. Agencement de chauffage selon la revendication 1, **caractérisé en ce que** chaque sous-ensemble présente au moins deux tôles de contact (3) sur lesquelles est placé, latéralement, un élément de contact (7) qui sert à la mise en contact électrique.

3. Agencement de chauffage selon la revendication 2, **caractérisé en ce que** l'élément de contact (7) comprend des languettes élastiques.

4. Agencement de chauffage selon l'une quelconque des revendications précédentes, **caractérisé en ce que** le cadre (9) est un cadre en matière plastique.

5. Agencement de chauffage selon l'une quelconque des revendications précédentes, **caractérisé en ce qu'**il est prévu une deuxième entretoise transversale perpendiculaire à une première entretoise transversale s'étendant parallèlement aux sous-ensembles.

6. Agencement de chauffage selon l'une quelconque des revendications précédentes, **caractérisé en ce qu'**un cadre (9) entourant les circuits chauffants (8) est configuré au moins en deux parties, où les différents éléments sont reliés les uns aux autres au moyen d'assemblages clipsés.

7. Agencement de chauffage selon l'une quelconque des revendications précédentes, **caractérisé en ce que** les deux ailettes ondulées (6) sont disposées sur le côté extérieur de deux tôles de contact (3, 4) entre lesquelles il est prévu un élément CTP (2).

8. Agencement de chauffage selon la revendication 7, **caractérisé en ce qu'**il est prévu latéralement, sur le cadre (9), un couvercle (10) qui forme une partie du cadre et assure la mise en contact électrique.

9. Agencement de chauffage selon la revendication 8, **caractérisé en ce que** le couvercle (10) est fixé au moyen d'assemblages clipsés.

10. Agencement de chauffage selon l'une quelconque des revendications précédentes, **caractérisé en ce que** l'agencement de chauffage (1) comprend au moins deux circuits chauffants indépendants (8), où un ou plusieurs circuits chauffants (8) est ou sont associé(s) à une ou deux zones de climatisation d'un système de climatisation multizone.
